# EUROPEAN PATENT APPLICATION

(11) **EP 4 099 642 A2**
(43) Date of publication of application: **07.12.2022**
(21) Application number: 22159394.0
(22) Date of filing: 01.03.2022
(51) Int. Cl.: H04L 12/40, B60R 16/023, H04L 12/413, H04L 9/40

(54) **CAN TRANSCEIVER**

(30) Priority: 09.03.2021 US 202117249674
(71) Applicant: NXP B.V., 5656 AG Eindhoven (NL)
(72) Inventor: Walrant, Thierry G. C., 5656 AG Eindhoven (NL); Engelhard, Axel, 5656 AG Eindhoven (NL); Elend, Bernd Uwe Gerhard, 5656 AG Eindhoven (NL); Olma, Georg, 5656 AG Eindhoven (NL)
(74) Representative: Hardingham, Christopher Mark

(57) **Abstract**

A transceiver for sending and receiving data from a controller area network (CAN) bus is disclosed. The transceiver includes a microcontroller port, a transmitter and a receiver. The transceiver is configured to determine if a received wake-up frame (WUF) is authorized or unauthorized and if the received WUF is unauthorized, the transceiver is configured to ignore the received WUF to prevent a microcontroller coupled with the microcontroller port from waking up.

## Description

### BACKGROUND

Controller area network (CAN) bus is a message-based communications bus protocol that is often used within automobiles. The CAN bus protocol is used to enable communications between various electronic control units (ECUs), such as an engine control module (ECM), a power train control module (PCM), airbags, antilock brakes, cruise control, electric power steering, audio systems, windows, doors, mirror adjustment, battery and recharging systems for hybrid/electric cars, and many more. The data link layer of the CAN protocol is standardized as International Standards Organization (ISO) 11898-1. The standardized CAN data link layer protocol is in the process of being extended to provide higher data rates. The extended protocol, referred to as CAN Flexible Data-Rate or "CAN FD," is moving towards standardization in the form of an update of the existing ISO 11898-1 standard.

The CAN bus is a vehicle bus standard designed to allow microcontrollers and devices to communicate with each other's applications without a host computer. CAN is a message-based protocol that uses two wires to enable multiple devices to communicate with each other and is used in many type of applications including automotive applications. For each message, the data in a packet is transmitted sequentially but in such a way that if more than one device transmits messages at the same time, only the highest priority message is able to continue while other devices stop transmitting their message. This process, known as "arbitration", is used by all sending devices and the device that attempts to send the highest priority message wins the arbitration. Transmitted packets are received by all devices, including by the transmitting device receiving its own message. However, a malicious device may attempt to hijack the bus control even after losing the arbitration.

In the CAN bus, each microcontroller or Electronic Control Unit (ECU) uses a transceiver to send and receive data on a CAN bus. In other words, a typical transceiver provides an interface between the CAN bus and the microcontroller. A typical transceiver normally provides a ISO 11898 standard compliant communication over the CAN bus without scrutinizing the data content.

One growing concern with in-vehicle networks, such as in-vehicle networks that use the CAN bus protocol, is network security, including intrusion detection and intrusion prevention. For example, a compromised in-vehicle network could allow an attacker to maliciously control components of a vehicle and or allow an attacker to send malicious wake up messages to wake up other ECUs even though the ECUs are not needed to be woken up.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In one embodiment, a transceiver for sending and receiving data from a controller area network (CAN) bus is disclosed. The transceiver includes a microcontroller port, a transmitter and a receiver. The transceiver is configured to determine if a received wake-up frame (WUF) is authorized or unauthorized and if the received WUF is unauthorized, the transceiver is configured to ignore the received WUF to prevent a microcontroller coupled with the microcontroller port from waking up. In some examples, the WUF frame is determined to be authorized if the WUF frame includes a predefined CAN identifier. In other examples, the WUF frame is determined to be authorized if the WUF frame includes a recessive ACK delimiter bit. In some other examples, a WUF frame is determined to be authorized if the WUF includes a predefined CAN identifier and also includes a recessive ACK delimiter bit.

In some examples, the transceiver includes a memory to store a configuration data. The configuration data includes one or more CAN identifiers that an authorized WUF must include. In some other examples, the configuration data includes a list of CAN identifiers that are unauthorized to send the wake up frame.

In some examples, the transceiver is configured to determine if ACK delimiter bit of the received WUF is recessive or dominant and further configured to wake-up the microcontroller only if the ACK delimiter bit is recessive.

In another embodiment, a method of preventing a controller area network (CAN) node on a CAN bus from waking up via an unauthorized wake-up frame is disclosed. The method includes receiving a wake-up frame (WUF) including a ACK delimiter bit, determining if the ACK delimiter bit is recessive or dominant and waking up the microcontroller only if the ACK delimiter bit is recessive. In some examples, the WUF frame is determined to be authorized if the WUF frame includes a predefined data pattern in a payload of the WUF frame. In some other examples, the identifier included in the WUF frame and a predefined data pattern in the payload of the WUF frame may be checked to determine if the WUF is authorized. The WUF frame is determined to be unauthorized if the WUF frame includes a dominant bit in the end-of-frame (EOF) or/and glitches in a payload of the WUF frame or/and a negative bus voltage or/and at least one of a dominant ACK bit, wider bit widths than defined by CAN protocol.

In yet another embodiment, a method for preventing a controller area network (CAN) node on a CAN bus from waking up via an invalid wake-up frame is disclosed. The method includes receiving the WUF and verifying if cyclic redundancy check (CRC) of the WUF is valid and ignoring the WUF if the CRC is invalid and if the CRC is valid, verifying if the WUF is includes a preconfigured WUF CAN identifier and ignoring the WUF if the WUF does not include the preconfigured WUF CAN identifier and checking if ACK delimiter bit is recessive, if the ACK delimiter bit is not recessive, ignoring the WUF. In embodiments, the WUF frame is determined not to include a predefined data pattern in the payload if the WUF frame includes a negative bus voltage. In embodiments, the WUF frame is determined not to include a predefined data pattern in the payload if the WUF frame includes at least one of a dominant ACK bit, wider bit widths than defined by CAN protocol. In embodiments, the WUF frame is determined not to include a predefined data pattern in the payload if the WUF frame includes a recessive ACK delimiter bit.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:
FIG. 1 depicts a controller area network (CAN) bus with communication nodes;
FIG. 2 depicts CAN bus communication protocol showing a representation of "0" and "1" based on a differential voltage at CANH and CANL;
FIG. 3 depicts a part of the CAN bus including three ECUs in accordance with one or more embodiments of the present disclosure;
FIG. 4 depicts an improved transceiver in accordance with one or more embodiments of the present disclosure; and
FIG. 5 depicts a method of validating or invalidating a wake-up frame (WUF) in accordance with one or more embodiments of the present disclosure.

Note that figures are not drawn to scale. Not all components of the secure transceiver are shown. The omitted components are known to a person skilled in the art.

### DETAILED DESCRIPTION

Many well-known manufacturing steps, components, and connectors have been omitted or not described in details in the description so as not to obfuscate the present disclosure.

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", "one example", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

Controller Area Network (CAN) is a peer-to-peer network. Meaning that there is no master that controls when individual nodes have access to read and write data on the CAN bus. The CAN frames that are transmitted do not contain addresses of either the transmitting node or any of the intended receiving node(s). Instead, an arbitration ID that is unique throughout the network is contained in a data frame. All nodes on the CAN network receive every CAN frame that is transmitted by any node, and, depending on the message or arbitration identifier of the transmitted frame, each CAN node on the network decides whether to accept the frame for further processing.

If multiple nodes try to transmit messages onto the CAN bus at the same time, the node with the highest priority (lowest value of message or arbitration identifier) gets bus access. Lower-priority nodes (or messages) must wait until the bus becomes available before trying to transmit again.

CAN nodes (e.g., ECUs) use transceivers to interface with the CAN bus. The transceivers include an Rx port and a Tx port to enable communication with other CAN nodes through the CAN bus 100. Transceivers normally provide a simple interface for mode control from a device/microcontroller in a network. A typical standard transceiver makes use of up to two dedicated mode control pins, and this means that there are usually not more than four different states of operation.

The CAN protocol specifies the structure of a CAN frame. The CAN frame includes:
1. SOF (start-of-frame) bit - indicates the beginning of a message with a dominant (logic 0) bit.
2. Message or Arbitration ID - identifies the message and indicates the message's priority. Frames come in two formats -- standard, which uses an 11-bit arbitration ID, and extended, which uses a 29-bit arbitration ID.
3. IDE (identifier extension) bit - allows differentiation between standard and extended frames.
4. RTR (remote transmission request) bit - serves to differentiate a remote frame from a data frame. A dominant (logic 0) RTR bit indicates a data frame. A recessive (logic 1) RTR bit indicates a remote frame.
5. DLC (data length code) - indicates the number of bytes the data field contains.
6. Data Field - contains 0 to 8 bytes of data.
7. CRC (cyclic redundancy check) - contains 15-bit cyclic redundancy check code and a recessive delimiter bit. The CRC field is used for error detection.
8. CRC delimiter.
9. ACK (ACKnowledgement) slot - any CAN controller that correctly receives the message sends an ACK bit at the end of the message. The transmitting node checks for the presence of the ACK bit on the bus and reattempts transmission if no acknowledge is detected.
10. ACK delimiter.
11. End of Frame (EOF).

The ISO 11898 standard has been developed at a time security was not a primary concern. In a partial networking scenarios, a valid frame decoding does not consider the values of the bits after the CRC delimiter. Therefore, a standard Error Frame after valid CRC cannot be used to invalidate the wake-up frame already accepted prior the ACK slot bit. Whenever the wake-up frame is considered malicious by an ECU, the possible standard transmission invalidation with error frame as defined by ISO 11898-1 is not able to prevent or block the unauthorized wake-up. A malicious node is able to arbitrarily wake-up nodes with power consumption management constraints leading to unexpected consequences such as battery drained. The selective wake-up mechanism cannot be safely secured.

In vehicle networks, the mechanism of the selective wake-up frame is used to manage the low power mode of modules and ECU. Each module or ECU are selectively put in low power mode or awakened individually by network messages transmitted from a low power manager module or ECU. The module or ECU in low power mode accepts a wake-up message whenever the message is valid (i.e., based on a valid CRC) and ignores possible invalidation of the message by error signaling. As a result, an illegitimate wake-up frame - possibly invalidated on the network - can be used by malicious node to freely awaken a module or ECU with potential consequences on the power management. The embodiments described herein provide system and method to enable the invalidation of the wake-up message. In some examples, the responsibility to send the wake up frame is assigned by design according to the original equipment manufacturer (OEM) system specification, and the configuration is deployed to the transceiver of the specified ECU or ECUs. If a wake up frame is sent by any ECU that is not authorized to send the wake up frame, the a wake-up control node on the CAN bus invalidates the wake up frame.

Partial networking is one of the methods to save power in CAN networks. Partial networking is intended to make it possible for a node or a sub-network to be woken individually by means of dedicated and predefined messages. When a node's tasks are not required the node is in selective sleep mode.

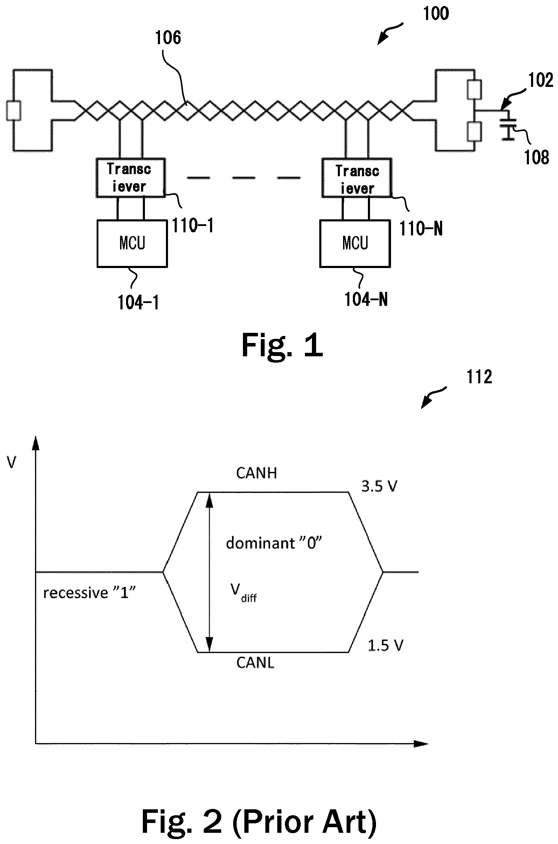

Figure 1 depicts a controller area network (CAN) bus 100. The CAN bus 100 includes terminating end resistors to suppress wave reflections. In some embodiments, a capacitor 108 may also be used at a terminating end. The CAN bus 100 includes a twisted wire pair 106. The twisted wire pair 106 includes CANH and CANL wires. The CAN bus 100 may include a plurality of microcontrollers (MCUs) or electronic control units (ECUs) 104-1..104-N coupled with the twisted wire pair through a plurality of secure transceivers 110-1..110-N. The capacitor 108 is typically 4.7nF. The value of the capacitor 108 may be increased to approximately 100nF. By increasing the value of the capacitor 108, a signal voltage at CANL or CANH during intermittent opens is improved. In one example, the resistors coupled with the capacitor 108 are typically 60 ohm each (total 120 ohm at each end).

As shown, the communication nodes (ECUs) 104-1... 104-N are connected via an unshielded twisted pair 106. Termination is implemented at the far left- and right-hand side of the CAN bus 100. There are two options, either by using a single resistor as shown in the lefthand side of the CAN bus 100, or via two resistors and the capacitor 108, referred to as "split-termination" as shown on the right-hand side of the CAN bus 100. The latter method is commonly used as it offers an additional low-pass filtering to improve EMC performance.

As shown in Figure 2, in normal operations (when no errors are present), the CAN bus 100 signals CANH and CANL are driven such that a differential voltage is generated (to send a dominant signal) or no differential signal is generated (to send a recessive bit). In some implementations, for a dominant bit ("0") the voltage at CANL is approximately 1.5V (for example) and the voltage at CANH is 3.5V (for example) and V_{diff} represents a difference between the voltages at CANH and CANL. In some examples, Vdiff > 0.9V may be considered a dominant bit and Vdiff < 0.5 may be considered a recessive bit.

The communication nodes (e.g., ECUs 104-1... 104-N) on the CAN bus 100 that wish to send data on the CAN bus send a dominant SOF bit when the CAN bus 100 is idle (e.g., in the recessive state for a duration) to indicate that the nodes would like to send a data frame. Next, each node sends a message identifier. Note that the nodes are configured such that no two nodes can send a data frame including the same message identifier. The CAN protocol provides an 11-bit message identifier. In another version of the CAN protocol, the message identifier is specified to include 29 bits. The relative priority of a message identifier is characterized by the value of the message identifier. A lower value message identifier has a higher priority. For example, the message identifier with the value 11001000111 (0x647) will have a higher priority than the message identifier with the value 11011111111 (0x6FF).

If the ECU 104-1 and the ECU 104-N simultaneously send SOF bit and then start transmitting the message identifiers 11001000111 and 11011111111 respectively, on the fourth bit, the ECU 104-1 will win the arbitration because it will send a dominant bit, which will overwrite the recessive bit sent by the ECU 104-N. The ECU 104-1 will read a dominant bit after sending a dominant bit on the CAN bus 100 and will continue to send further data bits whereas the ECU 104-N will read a dominant bit after having sent a recessive bit (e.g., the fourth most significant bit in the above message identifier example) and will assume that it has lost the arbitration and will stop sending further data bits on the CAN bus 100, and will wait for the CAN bus 100 to be free again before attempting to send the message, at which time, the process of arbitration will start again.

The ECUs coupled with the CAN bus 100 may be configured to operate in low power or different power modes to conserve power. US Patent No. 9,112,721 entitled "System and methods for enabling a controller area network (CAN) device to operate in different power modes based upon the payload of a wake-up message" by Behrens el al., which is being incorporated by reference in its entirety, discloses wake up process. US Patent No. 10,361,934 entitled "Controller area network (CAN) device and method for controlling CAN traffic" by Muth at al., which is being incorporated herein by reference in its entirety, discloses a secure transceiver.

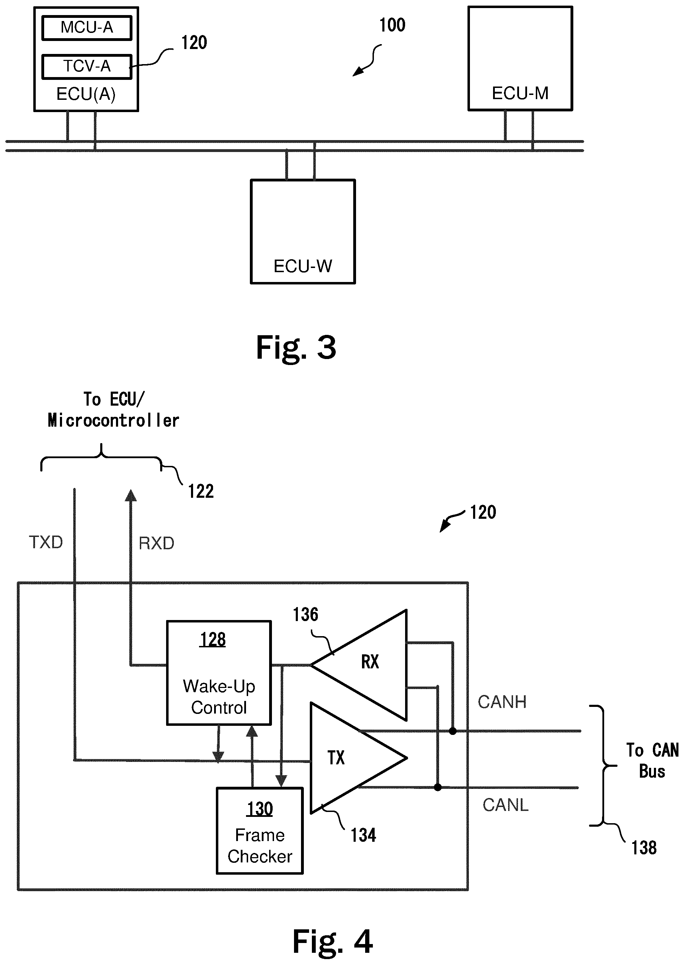

Figure 3 shows a part of the CAN bus 100 including a potentially malicious ECU (ECU-M), a wake-up control ECU (ECU-W) and a ECU (ECU-A) that includes a microcontroller MCU-A and a transceiver TCV-A. ECU-W also includes a transceiver that may be the same type as the transceiver TCV-A or ECU-W may include another type of transceiver that include security features such as allowing a particular type of CAN messages based on CAN identifiers from specific microcontrollers. ECU-W is configured not to allow wake-up frames from other ECUs on the CAN bus 100. ECU-W is also configured to selectively wake-up other ECUs. ECU-W may be configured to invalidate wake-up frames received from other ECUs. In some examples, ECU-W may be configured to invalidate wake-up frames received from other ECUs by checking if the CAN identifier in the received message. For example, if another ECU sends a wake-up frame with a particular identifier that only ECU-W is allowed to use, ECU-W may invalidate the received wake-up frame on the CAN bus 100. In some embodiments, ECU-W may invalidate the wake-up frame by sending an error message on the CAN bus 100. In some examples, this error message sent by ECU-W may invalidate the wake-up frame by changing its ACK delimiter to a dominant bit by the way of, for example, forcing a protocol error.

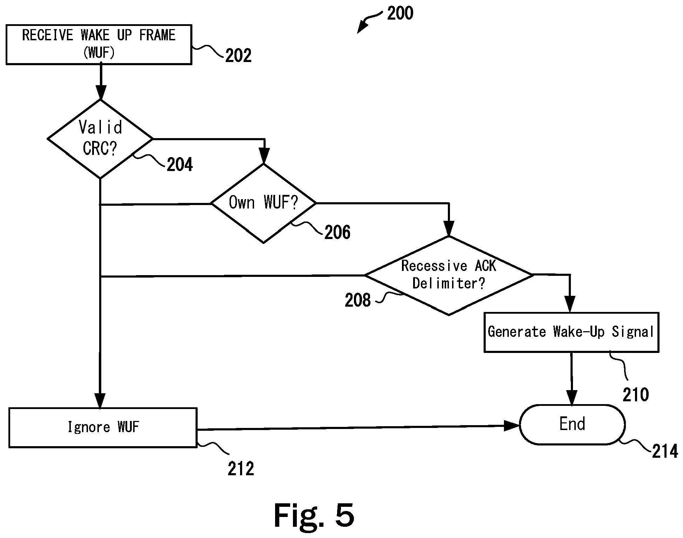

ECU-W is preconfigured to generate wake up signals when other ECUs need to be woken up from a low power mode. In some examples, more than one ECU or type ECU-W may be present on the CAN bus 100. At ECU-A, TCV-A is configured to wake-up MCU-A if the wake-up frame is valid according to the method described in Figure 5.

Figure 4 shows a transceiver 120. Note that many known components of the transceiver 120 have been omitted so as not to obfuscate the present disclosure. The transceiver 120 may replace the transceiver 110-N in Figure 1 (and of course any other transceiver on the CAN bus 100) to make the CAN bus 100 shown in Figure 1 to provide a secure wake-up function. The transceiver 120 depicts the transceiver TCV-A of Figure 3.

The transceiver 120 includes a transmitter (TX) 134 and a receiver (RX) 136. The transceiver 120 includes a microcontroller port 122 to send/receive data from a microcontroller or ECU. The transceiver 120 also includes a CAN bus port 138 to send/receive data to/from the CAN bus 100. The data received from the CAN bus 100 is transmitted to the microcontroller to enable the microprocessor to functionally process the received data. The RX 136 translates the signals received from the CAN bus port 138 to a form that is compliant with the microcontroller coupled with the microcontroller port 122. Similarly, when a data is received from the microcontroller or ECU, the received data is transmitted to the CAN bus 100. The TX 134 translates the data received from the microcontroller in a signal that is compliant with CAN standards.

The transceiver 120 may include an frame checker 130 to store at least one CAN identifier and/or a pattern of frame to check the payload of a CAN message against one or more predefined data patterns in the message payload. In some embodiments, the frame checker 130 may be a part of the wake-up control 128. In some examples, the stored one or more CAN identifiers may include wake-up message identifiers that are preconfigured to be used for waking up the microcontroller coupled with the microcontroller port 122. In operation, the frame checker 130 is used to compare the received CAN identifier with the stored identifier. If a match signal is generated in response to a comparison of an identifier to a stored identifier by the compare logic, the match signal is provided to a wakeup control module 128. In some examples, instead or in addition to check for one or more CAN identifiers, the frame checker 130 may check for one or more predefined patterns in the payload of a CAN message for a match. In some examples, a typical transceiver simply wakes up the microcontroller upon receiving a valid wake-up frame. In a typical scenario, bits after the CRC delimiter are ignored by a typical transceiver. However, the transceiver 120 is configured to read the ACK delimiter if the received frame is a wake up frame. In case of a valid wakeup frame, the ACK delimiter should be decoded as a recessive bit. If not, the wakeup control module 128 is configured to ignore an unauthorized wake-up frame, hence preventing unauthorized wake up. In some examples, the frame checker 130 may contain a list of authorized identifier in addition to or in place of the list of unauthorized identifier. The frame checker 130 may also include frame data patterns to match to identify a valid or authorized wake-up frame.

When the frame checker 130 notifies the wake-up control module 128 that the incoming wake-up frame is unauthorized, the transceiver 120 disregards the wake up frame when the ACK delimiter is decoded as a dominant bit. In some embodiments, the frame checker 130 functions may also be implemented in the wake-up control module 128. In some examples, the data pattern in the frame payload may be checked for a dominant bit in the end-of-frame (EOF), glitches in the payload, a negative bus voltage, a dominant ACK bit, protocol non-compliance, wider bit widths than defined by the protocol, etc.

As stated earlier, the transceiver 120 is equipped with a CAN ISO11898 compliant receiver (e.g., the RX 136) that is capable of decoding frames on the CAN bus 100. The transceiver 120 may also include a clock recovery and sampling circuit (not shown) on the TXD input from the microcontroller coupled with the ECU port 122. The bits received on the ECU port 122 are checked for length, glitches and/or improper bit timing. In some optional examples, if a deviation from expected behavior is detected, the transceiver 120 is configured to invalidate the frame on the CAN bus 100 to cause the transmitting node to retransmit the frame and / or disable transmit and/or receiving capabilities of the transceiver 120 to isolated unexpected behavior of the microcontroller that is coupled with the ECU port 122. The configuration data, containing bit timing settings, may be pre-stored in the transceiver 120. The configuration data may be stored in non-volatile memory or downloaded in volatile memory before the transceiver 120 is brought to an operational mode. The transceiver 120 is configured to modify the RXD data on the fly towards the microcontroller coupled with the ECU port 122 and overrule the data on the CAN bus 100 by transmitting a dominant bit or an invalidation signal and/or disable the TX 134.

In some examples, the transceiver 120 may not include any additional pins so that the transceiver 120 may be used as a "drop in" to replace a conventional CAN transceiver. In the examples in which the frame checker130 and the wakeup control module 128 are implemented either fully or partially in software, the transceiver 120 may be configured to be programmed with additional data validation rules. In some examples, if the transceiver 120 is configurable to be programmed, a temper proof security mechanism may be employed such that only authorized devices or entities may alter the existing programming stored in the transceiver 120.

In some examples, the wake up frame may be generated by the microcontroller coupled with the transceiver 120 on the microcontroller port 122. Through the frame checker 130, the transceiver 120 may determine that the microcontroller coupled with the transceiver 120 is not authorized, according to the preset configuration, to send wake up frames. In such optional embodiments, the transceiver 120 may invalidate or ignore the wake-up frame generated by the microcontroller coupled with the microcontroller port 122. In some embodiments, the wake-up frame may be invalidated by adding an error message starting after the CRC delimiter.

Figure 5 shows a method 200 that is executed by the transceiver 120 to prevent an unauthorized wake-up of the microcontroller coupled with the microcontroller port 122. At step 202, the transceiver 120 receives a WUF. At decision step 204, the transceiver 120 verifies if the CRC of the received frame is valid. If the CRC is not valid, the WUF is ignored. If the CRC is verified, at step 206, the transceiver checks if the WUF includes the CAN identifier that the microcontroller coupled with the transceiver 120 is configured to accept or process. If no, at step 212, the WUF may be ignored. If yes, at step 208, the transceiver 120 checks if the ACK delimiter bit is recessive. If yes, at step 210, a wake-up signal is generated to wake-up the microcontroller, else the WUF is ignored and the process finishes at step 214.

Some or all of these embodiments may be combined, some may be omitted altogether, and additional process steps can be added while still achieving the products described herein. Thus, the subject matter described herein can be embodied in many different variations, and all such variations are contemplated to be within the scope of what is claimed.

While one or more implementations have been described by way of example and in terms of the specific embodiments, it is to be understood that one or more implementations are not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the invention as claimed.

Preferred embodiments are described herein known to the inventor for carrying out the claimed subject matter. Of course, variations of those preferred embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

## Claims

1. A transceiver for sending and receiving data from a controller area network (CAN) bus, the transceiver includes a microcontroller port, a transmitter and a receiver, wherein the transceiver is configured to determine if a received wake-up frame (WUF) is authorized or unauthorized and if the received WUF is unauthorized, the transceiver is configured to ignore the received WUF to prevent a microcontroller coupled with the microcontroller port from waking up.

2. The transceiver of claim 1, wherein the WUF frame is determined to be authorized if the WUF frame includes a predefined CAN identifier that is set by a node that is preconfigured to send wake-up messages on the CAN bus.

3. The transceiver of claim 1 or 2, wherein the WUF frame is determined to be authorized if the WUF frame includes a predefined data pattern in a payload of the WUF frame.

4. The transceiver of any preceding claim, wherein the WUF frame is determined to be unauthorized if the WUF frame includes a dominant bit in the end-of-frame (EOF).

5. The transceiver of any preceding claim, wherein the WUF frame is determined to be unauthorized if the WUF frame includes glitches.

6. The transceiver of any preceding claim, wherein the WUF frame is determined to be unauthorized if the WUF frame includes a negative bus voltage.

7. The transceiver of any preceding claim, wherein the WUF frame is determined to be unauthorized if the WUF frame includes at least one of a dominant ACK bit, wider bit widths than defined by CAN protocol.

8. The transceiver of any preceding claim, wherein the WUF frame is determined to be authorized if the WUF frame includes a recessive ACK delimiter bit.

9. The transceiver of any preceding claim, wherein the WUF frame is determined to be unauthorized if the WUF frame includes a dominant ACK delimiter bit.

10. The transceiver of any preceding claim 1, further including a memory to store a configuration data, wherein the configuration data includes one or more CAN identifiers that an authorized WUF must include.

11. The transceiver of any preceding claim, further including a memory to store a configuration data, wherein the configuration data includes a list of CAN identifiers that are unauthorized to send the wake up frame and predefined data patterns of a payload of a CAN message.

12. The transceiver of any preceding claim, further configured to determine whether ACK delimiter bit of the received WUF is recessive or dominant and further configured to wake-up the microcontroller only if the ACK delimiter bit is recessive.

13. A method for preventing a controller area network (CAN) node on a CAN bus from waking up via an unauthorized wake-up frame (WUF), the method comprising:
receiving the WUF; and
verifying if cyclic redundancy check (CRC) of the WUF is valid and ignoring the WUF if the CRC is invalid and if the CRC is valid, verifying if the WUF is includes a preconfigured WUF CAN identifier or a predefined data pattern in a payload of the WUF and ignoring the WUF if the WUF does not include the preconfigured WUF CAN identifier or the defined data pattern, and checking if ACK delimiter bit is recessive, if the ACK delimiter bit is not recessive, ignoring the WUF.

14. The method of claim 13, wherein the WUF frame is determined not to include a predefined data pattern in the payload if the WUF frame includes a dominant bit in the end-of-frame (EOF).

15. The method of claim 13 or 14, wherein the WUF frame is determined not to include a predefined data pattern in the payload if the WUF frame includes glitches in a payload of the WUF frame.
